(19) Europäisches Patentamt
European Patent Office
Office européen des brevets

(11) EP 0 638 137 B1

(12) FASCICULE DE BREVET EUROPEEN

(45) Date de publication et mention de la délivrance du brevet:
**11.09.1996 Bulletin 1996/37**

(21) Numéro de dépôt: **93911813.9**

(22) Date de dépôt: **22.04.1993**

(51) Int Cl.[6]: **E21D 9/06**, E21B 33/138, C09K 7/08, B01F 17/00

(86) Numéro de dépôt international:
**PCT/FR93/00394**

(87) Numéro de publication internationale:
**WO 93/22538 (11.11.1993 Gazette 1993/27)**

# (54) PROCEDE D'EXCAVATION DE TUNNELS, UTILISATION D'UN AGENT MOUSSANT ET NOUVELLE COMPOSITION

VERFAHREN ZUM GRABEN VON TUNNELN, VERWENDUNG EINES SCHAUMMITTELS, UND NEUE ZUSAMMENSETZUNG

METHOD FOR EXCAVATING TUNNELS, UTILISATION OF A FOAMING AGENT AND NEW COMPOSITION

(84) Etats contractants désignés:
**AT BE CH DE DK ES FR GB GR IE IT LI NL PT SE**

(30) Priorité: **30.04.1992 FR 9205407**

(43) Date de publication de la demande:
**15.02.1995 Bulletin 1995/07**

(73) Titulaire: **SOCIETE D'EXPLOITATION DE PRODUITS POUR LES INDUSTRIES CHIMIQUES, S.E.P.P.I.C.**
**F-75321 Paris Cédex 07 (FR)**

(72) Inventeurs:
- **TYRTOFF, Nikita**
  **F-78170 La Celle-S.-Cloud (FR)**
- **BARBARIN, Michel**
  **F-95800 Enghein-les-Bains (FR)**

(74) Mandataire: **Caen, Thierry Alain**
**L'AIR LIQUIDE**
**Service Brevets & Marques**
**75, Quai d'Orsay**
**75007 Paris (FR)**

(56) Documents cités:
**EP-A- 0 070 074**
**WO-A-87/02051**
**GB-A- 2 099 884**
**GB-A- 2 177 741**
**US-A- 4 201 678**
**US-A- 4 442 018**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé d'excavation de tunnels au moyen d'un bouclier de creusement, notamment un bouclier du type à pression de terre, comportant un disque de coupe et une chambre de confinement, ainsi que l'utilisation d'un agent moussant pour l'excavation de tunnels et une nouvelle composition utile en tant qu'agent moussant.

Il est connu d'utiliser des mousses dans le forage de puits. Ces mousses ont notamment pour but de faciliter la remontée à la surface des déblais qui se présentent sous forme de particules ou gravats de petites tailles. Le document EP-A-070074 décrit une composition comprenant un alkylpolyglycoside, un co-surfactant et, le cas échéant, un alkylamide gras ou une amine-oxyde à titre d'auxiliaire de moussage. Cette composition peut être utilisée pour le forage d'un puits de pétrole. Le document US-A-4,442,018 décrit un concentrat soluble dans l'eau permettant la génération de mousse pouvant être notamment utilisée comme fluide pour le forage de puits. Ce concentrat comprend 70 à 80% d'eau, 2 à 3% d'un polymère d'acide acrylique, 8% d'un tensio-actif, 2 à 3% d'un stabilisant tel un alcool gras et 10% d'un solvant. Le document GB-A- 2 099 884 décrit une méthode pour creuser un trou au moyen d'un forêt rotatif. Selon cette méthode, on injecte dans le forêt une mousse formée d'un mélange d'eau de 0,1 à 1% d'un polymère et de 0,5 à 4% d'un tensio-actif.

En vue de l'excavation de galeries cylindriques ou de tunnels dans différents types de terrains, on utilise depuis quelques dizaines d'années des dispositifs dénommés boucliers de creusement. Les dispositifs de ce type comportent habituellement un cylindre métallique ou disque de coupe, entraîné en rotation autour de son axe, et dont le diamètre correspond à celui du tunnel à excaver, ce disque de coupe portant des outils d'abattage, et/ou des molettes de concassage permettant l'excavation du terrain.

Afin de stabiliser le front de taille, plusieurs solutions ont été envisagées, dont l'une des plus récentes et des plus avantageuses consiste en une stabilisation à l'aide de la pression de la terre excavée et confinée dans une chambre de coupe ou chambre de confinement, disposée à l'arrière au cylindre de coupe. Ce dernier est muni de fentes d'ouvertures permettant le passage des déblais vers la chambre de confinement. Les déblais accumulés dans la chambre de confinement peuvent en être évacués au moyen d'une vis sans fin d'extraction, habituellement disposée dans un corps tubulaire, et dans laquelle ils forment un bouchon mobile. On procède généralement de sorte à équilibrer soigneusement les quantités de matériaux excavés et de matériaux évacués en vue de maintenir une surpression prédéterminée dans la chambre de confinement.

Un tel bouclier, dit à pression de terre, est par exemple décrit dans la demande de brevet français N° 2,585,067. Lors de la mise en oeuvre de boucliers à pression de terre, on mélange habituellement les déblais à des boues lourdes, notamment pour faciliter leur évacuation. Toutefois, ces boues lourdes entraînent de nombreux inconvénients, en particulier la nécessité de mettre en oeuvre une centrale de production de boue de grande capacité et le traitement ultérieur des déblais rendus boueux. La demande de brevet japonais déposée sous le n° 119116/1978 divulgue un procédé d'excavation de tunnels au moyen d'un bouclier à pression de terre selon lequel on injecte à l'avant du disque de coupe, des mousses générées par activation d'une solution d'un tension-actif ou d'une protéine.

Ces mousses permettent non seulement d'obvier aux inconvénients des boues lourdes, mais de plus elles sont réputées pouvoir diminuer les frottements du disque de coupe sur le front de taille, et de conférer aux déblais une fluidité améliorant leur évacuation ainsi que leur imperméabilité à l'eau.

Cette dernière caractéristique est particulièrement importante lors de l'excavation en terrain meuble, notamment des terrains sableux ou sablo-graveleux, avec un haut niveau de la nappe phréatique, induisant des phénomènes de jaillissement d'eaux à travers le bouchon mobile de déblais situé au niveau de la vis sans fin. Il est donc important de conférer au bouchon mobile de déblais évacués par une telle vis sans fin, la plus grande imperméabilité possible.

Or il a été constaté que dans des terrains meubles riches en eau, notamment des terrains sableux ou sablo-graveleux, une mousse générée par un tensio-actif ou une protéine ne permet pas de conférer une imperméabilité à l'eau suffisante, de sorte que des phénomènes de jaillissement d'eaux se produisent encore.

Par ailleurs, il a été constaté que ce type de mousses n'est pas adapté à l'excavation de terrains à argiles très compactes dans la mesure où il ne permet pas une lubrification toujours suffisante des déblais, risquant ainsi de bloquer la vis sans fin.

De plus, ces mousses sont généralement peu stables dans le temps et présentent donc un temps de demi-vie relativement court.

De ce fait, le temps de les acheminer du point où elles sont formées jusqu'au bouclier de creusement puis à la sortie de la vis sans fin, ces mousses sont déstabilisées et ne peuvent plus jouer leur rôle d'agent lubrifiant et imperméabilisant du bouchon mobile.

Un premier objet de l'invention consiste en un procédé permettant d'améliorer l'imperméabilité à l'eau du bouchon mobile du déblais situé au niveau de la vis sans fin, notamment lors de l'excavation de terrains meubles du type sableux ou sablo-graveleux.

Un deuxième objet de l'invention consiste à améliorer la fluidité des déblais, notamment lors de l'excavation de

terrains à argiles compactes.

Un autre objet de l'invention consiste alors à permettre l'excavation de tunnels au travers de formations géologiques diverses disposées en continu, au moyen d'un même bouclier, en particulier d'un bouclier à pression de terre.

Un autre objet de l'invention consiste à diminuer les collages et colmatages des déblais, notamment, dans les fentes d'ouverture du disque de coupe, dans la chambre de confinement du bouclier, et au niveau de la vis sans fin d'extraction.

Encore un autre objet de l'invention est de permettre de diminuer l'énergie nécessaire à l'évacuation des déblais, notamment au niveau de la vis sans fin.

La présente invention consiste ainsi en un procédé d'excavation de tunnels au moyen d'un bouclier de creusement, notamment un bouclier du type à pression de terre, comportant un disque de coupe et une chambre de confinement, caractérisé en ce qu'on injecte une mousse à l'avant dudit disque de coupe et/ou dans ladite chambre de confinement, ladite mousse étant générée par activation d'un agent moussant comprenant au moins un tensio-actif et au moins un auxiliaire de moussage choisi dans le groupe constitué par les amines grasses, les alcools gras en $C_4$-$C_{30}$, les alkylolamides gras et les amino-oxydes ternaires.

Certains des agents moussants ci-dessus sont déjà connus en tant que tels, mais pour des applications dans lesquelles les mousses qu'ils génèrent sont soumises à des conditions très différentes de celles rencontrées lors de l'excavation de tunnels. Ainsi ces agents moussants sont habituellement utilisés pour former des mousses en vue de l'extinction d'incendie ou comme agent protecteur contre le gel des plantes, ou entrent dans la composition de shampooings ou de détergents ménagers.

Les auxiliaires de moussage préférés dans le cadre de la présente invention sont les amines grasse de formule :

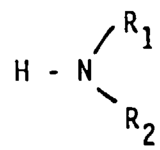

où $R_1$ est un atome d'hydrogène ou un radical hydrocarboné, linéaire ou ramifié, saturé ou insaturé, en $C_1$ - $C_{30}$, et $R_2$ est un radical hydrocarboné, linéaire ou ramifié, saturé ou insaturé en $C_4$ - $C_{30}$.

Plus particulièrement, $R_1$ et $R_2$, identiques ou différents, représentent un radical alkyle en $C_4$ - $C_{18}$.

Avantageusement, de telles amines grasses peuvent être choisies parmi les stéarylamines, les laurylamines, les cétylamines, les myristylamines, les décylamines, les octylamines, les 2-éthylhexylamines, ou leurs mélanges, tels ceux qui résultent de l'amination des acides gras issus des huiles de coprah ou de palme, totaux ou après fractionnement. La laurylamine et les amines obtenus à partir des acides gras du coprah sont tout particulièrement préférées.

Les alkylolamides gras pouvant constituer des auxiliaires de moussage sont habituellement obtenus par condensation d'un acide gras en $C_4$ - $C_{30}$ avec une alkylolamine, telles la monoéthonalamine, la diéthanolamine ou l'isopropanolamine.

Les amino-oxydes tertiaires préférés sont ceux de formule :

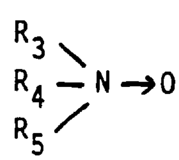

où $R_3$, $R_4$ et $R_5$ sont identiques ou différents et représentent un radical hydrocarboné, linéaire ou ramifié, saturé ou insaturé, en $C_1$ - $C_{30}$, l'un au moins de $R_3$, $R_4$ ou $R_5$ représentant un radical hydrocarboné, linéaire ou ramifié, saturé ou insaturé en $C_4$ - $C_{30}$.

Le tensio-actif constitutif dudit agent moussant peut être choisi parmi les alkylsulfates tels les alkylsulfates d'ammonium préparés à partir d'alcool laurique, notamment d'alcool laurique naturel obtenu par distillation des alcools de coprah ou les alkylsulfates de monoisopropanolamine, les bétaïnes, tels les alkylbétaïnes ou les alkylamidobétaïnes, notamment celles comportant un radical alkyle en $C_4$ - $C_{18}$ comme les alkylbétaïnes et alkylamidobétaïnes préparés à partir d'une chaîne grasse issue de l'huile de coprah, les mélanges d'alkylamidobétaïnes et d'alkylsulfosuccinates de sodium où le radical alkyle est en $C_4$ - $C_{18}$ et notamment ceux issus de l'huile de coprah, les alkyléthersulfates, notamment ceux où le radical alkyle est en $C_4$ - $C_{18}$, et de préférence les alkylethersulfates de sodium préparés à partir d'alcool laurique, les sulfonates, tels les alpha oléfines sulfonates, les alkylpolyglycosides de formule :

$$R - (OCH_2CH_{2)n} - (G)_m$$

où R est un radical hydrocarboné, linéaire ou ramifié, saturé ou insaturé en $C_8$ - $C_{24}$
G est un sucre réducteur en $C_5$ - $C_6$ tels le galactose, le glucose ou le fructose,
n est un nombre compris entre 0 et 20,
et m est un nombre compris entre 1 et 10.

Dans le cadre de la présente invention, les alkyloglycosides sont des tensio-actifs préférés.

La proportion des auxiliaires de moussage peut être de 1 à 50 %, de préférence de 2 à 15 % par rapport au poids des tensio-actifs. Lors de leur activation en vue de générer une mousse selon l'invention, les agents moussants sont habituellement en solution, généralement en solution aqueuse, en des concentrations pouvant être comprises entre 0,1 et 4 %, de préférence entre 0,3 et 1,5 % en poids. Outre un tensio-actif et un auxiliaire de moussage, l'agent moussant peut également comporter un ou plusieurs polymères ou copolymères, naturels ou synthétiques, tels les polyalkylèneglycols, les polysaccharides, les protéines, les polymères et copolymères comportant des motifs acryliques, métacryliques, acrylamides, carboxyliques et/ou vinyliques, tels les alcools polyvinyliques.

La proportion de ces polymères peut être comprise entre 0,1 et 6% en poids par rapport à l'agent moussant.

La mousse peut être générée classiquement par activation d'un agent moussant tel que défini ci-dessus, habituellement mis en solution, ladite activation pouvant être effectuée par introduction d'un gaz, de préférence un gaz comprimé, tel l'air ou l'azote, dans l'agent moussant en solution.

De préférence, l'agent moussant en solution est activé de sorte que le coefficient d'expansion K , mesuré à la pression atmosphérique, soit supérieur ou égal à 20, de préférence compris entre 30 et 40,

le coefficient d'expansion K étant déterminé par la relation suivante :

$$K= \frac{V m}{V a}$$

où Vm est le volume de la mousse après activation de l'agent moussant en solution
et Va est le volume de l'agent moussant en solution avant activation.

L'activation de l'agent moussant peut être réalisée de façon classique dans un générateur de mousse. La mousse ainsi obtenue peut alors être injectée par des moyens adaptés, à l'avant du disque de coupe et/ou dans la chambre de confinement où elle se mélange avec les déblais. Cette mousse permet notamment de diminuer de façon importante les frottements du disque de coupe sur le front de taille et de conférer au bouchon mobile de déblais situé au niveau de la vis sans fin une excellente imperméabilité à l'eau. Par ailleurs, cette mousse est très stable bien qu'elle soit soumise à des pressions supérieures à la pression atmosphérique et des contraintes de cisaillement régnant sur la face avant du cylindre de coupe, dans la chambre de confinement et au niveau de la vis sans fin. Lesdites pressions sont généralement supérieures à $1,5.10.^5$ Pa, et plus généralement comprises entre $2.10^5$ et $4.10^5$ Pa. De plus, les déblais mélangés à la mousse peuvent être évacués hors du bouclier de creusement sans avoir à être ultérieurement traités, la mousse se résorbant d'elle-même.

L'invention concerne encore une nouvelle composition pouvant être utilisée comme agent moussant, comprenant au moins un alkylpolyglycoside et, en tant qu'auxiliaire de moussage, au moins une amine grasse telle que définie cidessus.

Les alkylpolyglycosides préférés sont ceux de formule :

$$R\text{-}(OCH_2\ CH_2)n - (G)_m$$

où R est un radical alkyle, linéaire ou ramifié en $C_8$ - $C_4$, G est le glucose ou le fructose, n est égal à 0 et m est compris entre 1 et 5 plus particulièrement entre 1 et 2.

Une telle composition permet l'obtention d'une mousse qui présente une très grande stabilité sans pour autant affecter son foisonnement (ou hauteur de mousse). Or, si la stabilité dans le temps est un paramètre important que doit présenter une mousse, son foisonnement peut aussi consister en un paramètre à prendre en compte pour apprécier sa qualité. En effet, un bon foisonnement traduit la quantité d'énergie, le temps et donc la facilité de générer la mousse. Ainsi, plus le foisonnement est élevé, moindre est l'énergie et le temps nécessaire à générer un volume donné de mousse.

En outre, les mousses obtenues à partir de cette composition sont non toxiques et biodégradables.

Outre son utilisation pour l'excavation de tunnels selon le procédé de l'invention, le nouvel agent moussant peut être utilisé dans les applications classiques de ce type de composition.

En particulier, il peut être utilisé dans des compositions détergentes nettoyantes ou cosmétiques, tels des shampooings, ou pour générer des mousses en vue de l'extinction d'incendie ou de la protection des plantes contre le gel.

Les exemples suivants ont pour but d'illustrer la présente invention.

Exemple 1

En vue d'apprécier la perméabilité à l'eau d'un déblai, on mesure la vitesse de filtration de l'eau à travers une couche d'épaisseur standard de ce déblai, mélangé ou non à une mousse, celà sous une pression standard.

Le déblai testé est un sable standard. Pour obtenir un mélange sable-mousse on mélange 30 % en volume de mousse avec 70 % en volume de sable.

La mousse est générée par activation avec de l'air d'une solution aqueuse à 1% en poids d'un agent moussant A et d'un agent moussant B, selon l'invention, et, à titre comparatif, d'un agent moussant C, non représentatif de l'invention. L'activation est telle que le coefficient d'expansion K est égal à 10.

L'agent moussant A comporte, à titre d'auxiliaire de moussage, une amine grasse primaire dont la chaîne hydrophobe correspond à celle des acides totaux du coprah et un tensio-actif consistant en le lauryléthersulfate de sodium. La concentration en amine grasse est de 2 % en poids par rapport au tensio-actif.

L'agent moussant B comporte 15 % du même auxiliaire de moussage, par rapport au poids du tensio-actif consistant en la cocoamidopropylbétaïne.

L'agent moussant C comporte uniquement le tensio-actif de l'agent moussant A, soit un lauryléthersulfate de sodium.

Les résultats obtenus figurent dans le tableau I ci-dessus :

Tableau I

| Nature du déblai | Vitesse de filtration de l'eau (cm/s) |
|---|---|
| sable | $3,13. 10^{-2}$ |
| sable + mousse A | $1,49. 10^{-4}$ |
| sable + mousse B | $4,9. 10^{-4}$ |
| sable + mousse C | $1,5. 10^{-3}$ |

Le mélange des déblais avec une mousse générée par activation d'un agent moussant selon l'invention, augmente donc considérablement l 'imperméabilité à l'eau de ces déblais.

Exemple 2

A l'aide des agents moussants A et B, de l'exemple 1, et mis en solution dans l'eau à une concentration de 1 % en poids, on génère une mousse A et une mousse B avec un coefficient d'expansion K = 30 (à la pression atmosphérique).

Les mousses sont débitées dans une enceinte sous pression de $3.10^5$ Pa.

La stabilité des mousses sous cette pression est exprimée en temps nécessaire pour que la moitié du volume de la solution initiale ayant servie à générer la mousse, soit essorée de cette mousse.

Le temps de demi-vie ainsi mesuré est de 2H10 pour la mousse A, il est de 1h25 pour la mousse B.

Exemple 3

On prépare des agents moussants D à H selon l'invention, en mélangeant un tensio-actif, une amine grasse primaire dont la chaîne hydrophobe correspond à celle des acides totaux du coprah et de l'eau de ville.

A titre comparatif, on prépare des agents moussants D' à H' en mélangeant un tensio-actif et de l'eau de ville. Les compositions de ces agents moussants, exprimées en % en poids en matière active, figurent dans le Tableau II ci-dessous.

TABLEAU II

| Agent moussant | Nature du tensio-actif | teneur en tensio-actif | Teneur en amine grasse | eau de Ville QSP |
|---|---|---|---|---|
| D | Oramix NS 10 (1) | 25 | 2 | 100 |
| D' | Oramix NS10 (1) | 25 | 0 | 100 |

(1) Alkylpolyglucoside en $C_{10}$ commercialisé par la société SEPPIC,

TABLEAU II (suite)

| Agent moussant | Nature du tensio-actif | teneur en tensio-actif | Teneur en amine grasse | eau de Ville QSP |
|---|---|---|---|---|
| E | Elfan OS 46 (2) | 25 | 2 | 100 |
| E' | Elfan 05 46(2) | 25 | 0 | 100 |
| F | Lauryléthersulfate de Na | 25 | 2 | 100 |
| F' | Lauryléthersulfate de Na | 25 | 0 | 100 |
| G | Ammonyl 380 BA (3) | 23,8 | 2 | 100 |
| G' | Ammonyl 380 BA (4) | 23,8 | 0 | 100 |
| H | Ammonyl 265 BA (4) | 23,5 | 2 | 100 |
| H' | Ammonyl 265 BA (4) | 23,5 | 0 | 100 |

(2) Alpha oléfine sulfonate commercialisé par la société AKZO.
(3) Amidobétaïne commercialisée par la Société SEPPIC.
(4) Amidobétaïne commercialisée par la Société SEPPIC.

Ces agents moussants sont ensuite miss en solution à 1 % en poids dans de l'eau dure OMS.
Ces solutions sont introduites dans des éprouvettes graduées de 250 ml, puis soumises à une agitation pendant 2 minutes à 3.000 tours/minutes à l'aide d'un Microvortex, pour générer des mousses.

Le temps de demi-vie (en s.) à la pression atmosphérique et le foisonnement (hauteur de mousse en mm) de ces mousses sont mesurées.

Les résultats obtenus figurent dans le Tableau III ci-dessous.

TABLEAU III

| Mousse obtenue avec l'agent moussant | Temps de demi-vie | Foisonnement |
|---|---|---|
| D | 540 | 175 |
| D' | 420 | 172 |
| E | 510 | 180 |
| E' | 390 | 185 |
| F | 410 | 185 |
| F' | 380 | 190 |
| G | 405 | 180 |
| G' | 310 | 195 |
| H | 340 | 190 |
| H' | 320 | 195 |

Au vu de ces résultats, on peut constater que les agents moussants selon l'invention permettent d'améliorer notablement le temps de demi-vie et donc la stabilité des mousses qu'ils génèrent.

On peut également noter que le foisonnement obtenu avec l'agent moussant D selon l'invention, est, de manière surprenante, supérieur à celui obtenu avec l'agent moussant D', comparatif.

**Revendications**

1. procédé d'excavation de tunnels au moyen d'un bouclier de creusement, notamment un bouclier du type à pression de terre, comportant un disque de coupe et une chambre de confinement, caractérisé, en ce qu'on injecte une mousse à l'avant dudit disque de coupe et/ou dans ladite chambre de confinement, ladite mousse étant générée par activation d'un agent moussant comprenant au moins un tensio-actif et au moins un auxiliaire de moussage choisi dans le groupe constitué par les amines grasses, les alcools gras en $C_4$-$C_{30}$, les alkylolamides gras et les

amino-oxydes ternaires.

**2.** Procédé selon la revendication 1, caractérisé en ce que l'auxiliaire de moussage est une amine grasse de formule :

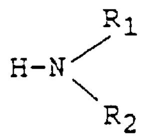

où $R_1$ est atome d'hydrogène ou un radical hydrocarboné, linéaire ou ramifié, saturé ou insaturé en $C_1$ - $C_{30}$, et $R_2$ est un radical hydrocarboné, linéaire ou ramifié, saturé ou insaturé en $C_4$ -$C_{30}$.

**3.** Procédé selon la revendication 2, caractérisé en ce que $R_1$ et $R_2$ identiques ou différents représentent un radical alkyle en $C_4$ - $C_{18}$.

**4.** Procédé selon l'une des revendications 2 et 3, caractérisé en ce que l'amine grasse est choisie parmi les stéaryiamines, les cétylamines, les myristylamines, les laurylamines, les décylamines, les octylamines, les 2-éthylhexylamines, ou leurs mélanges, tels ceux qui résultent de l'amination des acides gras issus des huiles de coprah ou de palme, totaux ou après fractionnement.

**5.** Procédé selon l'une des revendications 2 à 4, caractérisé en ce que l'amine grasse est la laurylamine ou les amines obtenues à partir des acides gras du coprah.

**6.** Procédé selon l'une des revendications précédentes, caractérisé en ce que le tensio-actif est choisi parmi les alkylsulfates tels les alkylsulfates d'ammonium préparés à partir d'alcool laurique, ou les alkylsulfates de monoisopropanolamine, les bétaïnes, tels les alkylbétaïnes ou les alkylamidobétaïnes, notamment celles comportant un radical alkyle en $C_4$ - $C_{18}$ comme les alkylbétaïnes et alkylamidobétaïnes préparées à partir d'une chaîne grasse issue de l'huile de coprah, les mélanges d'alkylamidobétaïnes et d'alkylsulfosuccinates de sodium, où le radical alkyle est en $C_4$ - $C_{18}$ et notamment ceux issus de l'huile de coprah, les alkylethersulfates, notamment ceux où le radical alkyle est en $C_4$ - $C_{18}$, et de préférence les alkylethersulfates de sodium préparés à partir d'alcool laurique, les sulfonates, tels les alpha oléfines sulfonates, les alkylpolyglycosides de formule

$$R - (OCH_2CH_{2)n} - (G)_m$$

où R est un radical hydrocarboné, linéaire ou ramifié, saturé ou insaturé en $C_8$ - $C_{24}$,
G est un sucre réducteur en $C_5$ - $C_6$ tels le galactose, le glucose ou le fructose,
n est un nombre compris entre 0 et 20,
et m est un nombre compris entre 1 et 10.

**7.** Procédé selon l'une des revendications précédentes caractérisé en ce que la proportion d'auxiliaire de moussage est de 1 à 50 %, de préférence de 2 à 15 % par rapport au poids des tensio-actifs.

**8.** Procédé selon l'une des revendications précédentes caractérisé en ce que l'agent moussant est en solution, de préférence en solution aqueuse.

**9.** Procédé selon la revendication 8 caractérisé en ce que la concentration de l'agent moussant dans la solution est comprise entre 0,1 et 4%, de préférence entre 0,3 et 1,5 % en poids.

**10.** Procédé selon l'une des revendications précédentes caractérisé en ce que l'agent moussant comporte en outre un ou plusieurs polymères naturels ou synthétiques, tels les polyalkylèneglycols, les polysaccharides, les protéines, les polymères ou copolymères comportant des motifs acryliques, méthacryliques, acrylamides, carboxyliques et/ou vinyliques, tels les alcools polyvinyliques.

**11.** Procédé selon l'une des revendications précédentes caractérisé en ce qu'on soumet la mousse injectée à une pression supérieure à $1,5.10^5$ Pa, de préférence à une pression comprise entre $2.10^5$ et $4.10^5$ Pa.

**12.** Procédé selon l'une des revendications précédentes caractérisé en ce que le coefficient d'expansion K de la mousse, à la pression atmosphérique, est supérieur ou égal à 20, de préférence comprise entre 30 et 40.

**13.** Procédé selon l'une des revendications précédentes caractérisé en ce qu'on active l'agent moussant en y introduisant un gaz tels l'air ou l'azote.

**14.** Agent moussant comprenant un alkylpolyglycoside de formule:

$$R - (OCH_2\ CH_2)_n - (G)_m$$

où R est un radical hydrocarboné, linéaire ou ramifié, saturé ou insaturé, en $C_8$ - $C_{24}$.
G est un sucre réducteur en $C_5$ - $C_6$.
n est un nombre compris entre 0 et 20,
m est un nombre compris entre 1 et 10,

et une amine grasse telle que définie dans l'une des revendications 1 à 5.

**15.** Agent moussant selon la revendication 14, caractérisé en ce que R est un radical alkyle, linéaire ou ramifié en $C_8$ - $C_{14}$, G est le glucose ou le fructose, n est égal à 0 et m est compris entre 1 et 5, de préférence entre 1 et 2.

**Patentansprüche**

**1.** Verfahren zum Graben von Tunneln mittels eines eine Schneidscheibe und eine Aufnahmekammer umfassenden Vortriebschildes, insbesondere eines nach dem Erddruckprinzip arbeitenden Schildes, dadurch gekennzeichnet, daß ein Schaum vor die Schneidscheibe und/oder in die Aufnahmekammer gespritzt wird, wobei der Schaum durch Aktivierung eines zumindest ein Tensid und zumindest ein aus der aus den Fettaminen, den $C_4$-$C_{30}$-Fettalkoholen, den Fettalkylolamiden und den ternären Aminooxiden bestehenden Gruppe gewähltes Schaumhilfsmittel umfassenden Schaummittels erzeugt wird.

**2.** Verfahren nach Anspruch 1, dadurch gekennzeichnet, daß das Schaumhilfsmittel ein Fettamin der Formel

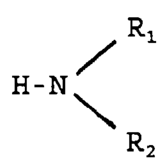

ist, in welcher $R_1$ für ein Wasserstoffatom oder einen linearen oder verzweigten, gesättigten oder ungesättigten $C_1$-$C_{30}$-Kohlenwasserstoffradikal und $R_2$ für einen linearen oder verzweigten, gesättigten oder ungesättigten $C_4$-$C_{30}$-Kohlenwasserstoffradikal steht.

**3.** Verfahren nach Anspruch 2, dadurch gekennzeichnet, daß gleiche oder unterschiedliche $R_1$ und $R_2$ einen $C_4$-$C_{18}$-Alkylradikal repräsentieren.

**4.** Verfahren nach einem der Ansprüche 2 oder 3, dadurch gekennzeichnet, daß das Fettamin aus den Stearylaminen, den Cetylaminen, den Myristylaminen, den Laurylaminen, den Decylaminen, den Octylaminen, den 2-Ethylhexylaminen, oder aus deren Gemischen, wie sie aus der Aminierung der aus Kopra- oder Palmölen hervorgehenden, ungespaltenen oder gespaltenen Fettsäuren resultieren, ausgewählt wird.

**5.** Verfahren nach einem der Ansprüche 2 bis 4, dadurch gekennzeichnet, daß das Fettamin Laurylamin ist oder aus den aus den Fettsäuren des Kopra gewonnenen Aminen besteht.

**6.** Verfahren nach einem der vorangehenden Ansprüche, dadurch gekennzeichnet, daß das Tensid aus den Alkylsulfaten wie den aus Lauryl-Alkoholen hergestellten Ammonium-Alkylsulfaten oder den Monoisopropanolamin-Alkylsulfaten, den Betainen wie den Alkylbetainen oder den Alkylamidobetainen, insbesondere den wie die aus einer aus Kopraöl gewonnenen Fettkette hergestellten Alkylbetaine und Alkylamidobetaine einen $C_4$-$C_{18}$-Alkylradikal umfassenden Betainen, den Alkylamidobetain- und Natrium-Alkylsulfosuccinat-Gemischen, bei welchen der Alkylradikal ein $C_4$-$C_{18}$-Alkylradikal ist und die insbesondere aus Kopraöl gewonnen wurden, den Alkylethersulfaten, insbesondere denjenigen, bei welchen der Alkylradikal ein $C_4$-$C_{18}$-Akylradikal ist, und bevorzugt aus den aus Lauryl-Alkohol hergestellten Natrium-Alkylethersulfaten, den Sulfonaten wie den Alpha-Olefin-Sulfonaten, den Al-

kylpolyglykosiden der Formel

$$R - (OCH_2CH_2)_n - (G)_m$$

in welcher R für einen linearen oder verzweigten, gesättigten oder ungesättigten $C_8$-$C_{24}$-Kohlenwasserstoffradikal steht, G für einen reduzierenden $C_5$-$C_6$-Zucker wie beispielsweise Galaktose, Glukose oder Fruktose steht, n eine Zahl zwischen 0 und 20 und m eine Zahl zwischen 1 und 10 ist.

**7.** Verfahren nach einem der vorangehenden Ansprüche, dadurch gekennzeichnet, daß der Anteil an Schaumhilfsmittel im Verhältnis zu dem Gewicht der Tenside zwischen 1 und 50 % und bevorzugt zwischen 2 und 15 % beträgt.

**8.** Verfahren nach einem der vorangehenden Ansprüche, dadurch gekennzeichnet, daß das Schaummittel als Lösung und bevorzugt als wäßrige Lösung vorliegt.

**9.** Verfahren nach Anspruch 8, dadurch gekennzeichnet, daß die Konzentration des Schaummittels in der Lösung zwischen 0,1 und 4 Gewichtsprozent und bevorzugt zwischen 0,3 und 1,5 Gewichtsprozent beträgt.

**10.** Verfahren nach einem der vorangehenden Ansprüche, dadurch gekennzeichnet, daß das Schaummittel außerdem ein oder mehrere natürliche oder künstliche Polymere wie die Polyalkylenglykole, die Polysaccharide, die Proteine, die Acryl-, Methacryl-, Acrylamid-, Carboxyl- und/oder, wie Polyvinyl-Alkohole, Vinyl-Gruppen umfassende Polymere oder Copolymere umfaßt.

**11.** Verfahren nach einem der vorangehenden Ansprüche, dadurch gekennzeichnet, daß der eingespritzte Schaum mit einem Druck von mehr als $1{,}5 \cdot 10^5$ Pa und bevorzugt mit einem Druck zwischen $2 \cdot 10^5$ und $4 \cdot 10^5$ Pa beaufschlagt wird.

**12.** Verfahren nach einem der vorangehenden Ansprüche, dadurch gekennzeichnet, daß der Ausdehnungskoeffizient K des Schaums bei atmosphärischem Druck größer als oder gleich 20 ist und bevorzugt zwischen 30 und 40 liegt.

**13.** Verfahren nach einem der vorangehenden Ansprüche, dadurch gekennzeichnet, daß das Schaummittel durch Einleiten eines Gases wie Luft oder Stickstoff aktiviert wird.

**14.** Schaummittel, umfassend ein Alkylpolyglykosid der Formel

$$R - (OCH_2\ CH_2)_n - (G)_m$$

in welcher R ein linearer oder verzweigter, gesättigter oder ungesättigter $C_8$-$C_{24}$-Kohlenwasserstoffradikal, G ein reduzierender $C_5$-$C_6$-zucker, n eine Zahl zwischen 0 und 20, und m eine Zahl zwischen 1 und 10 ist, sowie ein nach einem der Ansprüche 1 bis 5 definiertes Fettamin.

**15.** Schaummittel nach Anspruch 14, dadurch gekennzeichnet, daß R ein linearer oder verzweigter $C_8$-$C_{14}$-Alkylradikal ist, G Glukose oder Fruktose ist, n gleich 0 ist und m zwischen 1 und 5 und bevorzugt zwischen 1 und 2 liegt.

## Claims

**1.** Process for the excavation of tunnels by means of an excavating shield, in particular a shield of the ground pressure type, comprising a cutting disc and a containment chamber, characterized in that a foam is injected in front of the said cutting disc and/or into the said containment chamber, the said foam being generated by activating a foaming agent comprising at least one surface active agent and at least one foaming auxiliary selected from the group consisting of fatty amines, fatty alcohols with $C_4$-$C_{30}$, fatty alkylolamides and ternary amino-oxides.

**2.** Process according to claim 1, characterized in that the foaming auxiliary is a fatty amine of the formula

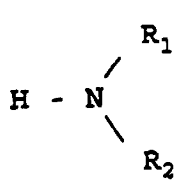

where $R_1$ is a hydrogen atom or a saturated or unsaturated, linear or branched hydrocarbon radical with $C_1$ - $C_{30}$, and $R_2$ is a saturated or unsaturated, linear or branched hydrocarbon radical with $C_4$ - $C_{30}$.

**3.** Process according to claim 2, characterized in that $R_1$ and $R_2$, either identical or different, represent an alkyl radical with $C_4$ - $C_{18}$.

**4.** Process according to either of claims 2 or 3, characterized in that the fatty amine is selected from stearylamines, cetylamines, myristylamines, laurylamines, decylamines, octylamines, 2-ethylhexylamines, or their mixtures, such as those resulting from the amination of fatty acids derived from coconut or palm oils, whole or after fractionation.

**5.** Process according to one of claims 2 to 4, characterized in that the fatty amine is laurylamine or amines obtained from coconut fatty acids.

**6.** Process according to one of the preceding claims, characterized in that the surface active agent is selected from alkyl sulphates such as ammonium alkyl sulphates prepared from lauryl alcohol, or alkyl sulphates of monoisopropanolamine, betaines, such as alkylbetaines or alkylamidobetaines, in particular those having an alkyl radical with $C_4$ - $C_{18}$ such as alkylbetaines or alkylamidobetaines prepared from a fatty chain derived from coconut oil, mixtures of alkylamidobetaines and sodium alkylsulphosuccinates, where the alkyl radical has $C_4$ - $C_{18}$ and in particular those derived from coconut oil, alkylether sulphates, in particular those where the alkyl radical has $C_4$ - $C_{18}$, and preferably sodium alkylether sulphates prepared from lauryl alcohol, sulphonates, such as alpha olefin sulphonates, and alkylpolyglycosides of the formula

$$R - (OCH_2CH_2)_n - (G)_m$$

where R is a saturated or unsaturated, linear or branched hydrocarbon radical with $C_8$ - $C_{24}$,
G is a reducing sugar with $C_5$-$C_6$ such as galactose, glucose or fructose,
n is a number between 0 and 20,
and m is a number between 1 and 10.

**7.** Process according to one of the preceding claims, characterized in that the proportion of foaming auxiliary is 1 to 50 %, preferably 2 to 15 % with respect to the weight of surface active agents.

**8.** Process according to one of the preceding claims, characterized in that the foaming agent is in solution, preferably in aqueous solution.

**9.** Process according to claim 8, characterized in that the concentration of the foaming agent in the solution is between 0.1 and 4 %, preferably between 0.3 and 1.5 % by weight.

**10.** Process according to one of the preceding claims, characterized in that the foaming agent comprises in addition one or more natural or synthetic polymers, such as polyalkylene glycols, polysaccharides, proteins, polymers or copolymers having acrylic, methacrylic, acrylamide, carboxylic and/or vinyl groups such as polyvinyl alcohols.

**11.** Process according to one of the preceding claims, characterized in that the injected mass is subjected to a pressure greater than $1.5 \times 10^5$ Pa, preferably to a pressure of between $2 \times 10^5$ and $4 \times 10^5$ Pa.

**12.** Process according to one of the preceding claims, characterized in that the coefficient of expansion K of the foam, at atmospheric pressure, is greater than or equal to 20, preferably between 30 and 40.

**13.** Process according to one of the preceding claims, characterized in that the foaming agent is activated by introducing a gas such as air or nitrogen.

**14.** Foaming agent comprising an alkylpolyglycoaide of the formula:

$$R - (OCH_2CH_2)_n - (G)_m$$

where

R is a saturated or unsaturated, linear or branched hydrocarbon radical with $C_8$ - $C_{24}$,
G is a reducing sugar with $C_5$ - $C_6$,

n is a number between 0 and 20,
m is a number between 1 and 10,
and a fatty amine such as defined in one of claims 1 to 5.

**15.** Foaming agent according to claim 14, characterized in that R is a linear or branched alkyl radical with $C_8$ - $C_{14}$, G is glucose or fructose, n is equal to 0 and m is between 1 and 5, preferably between 1 and 2.